# EUROPÄISCHE PATENTSCHRIFT

(11) **EP 2 527 311 B1**
(45) Veröffentlichungstag und Bekanntmachung des Hinweises auf die Patenterteilung: **17.08.2022**
(21) Anmeldenummer: 12168799.0
(22) Anmeldetag: 22.05.2012
(51) Int. Cl.: C04B 41/45, C04B 41/52, C09D 1/02, C09D 5/02, C09D 7/61, C09D 7/63, E04F 13/02, E04F 13/04, C09D 1/08, C04B 40/06, C04B 41/00, C04B 41/70, C04B 111/00, C09D 5/16

(54) **Beschichtungssystem, Wärmedämmverbundsystem, Wärmedämmplatte, Armierung sowie Verfahren zur Ausbildung einer Funktionsschicht**
Coating system, heat insulating compound system, heat insulating panel, reinforcement and method for creating a functional coating
Système de revêtement, système composite d'isolation thermique, plaque d'isolation thermique, armature et procédé de formation d'une couche fonctionnelle

(30) Priorität: 24.05.2011 DE 102011103008
(43) Veröffentlichungstag der Anmeldung: 28.11.2012
(73) Patentinhaber: STO SE & Co. KGaA, 79780 Stühlingen (DE)
(72) Erfinder: Basler, Stefan, 79780 Stühlingen-Weizen (DE); Holzer, Michael, 78316 Radolfzell (DE); Hettich, Brigitte, 78166 Donaueschingen (DE); Weier, Andreas, 78647 Trossingen (DE); Burgeth, Gerald, 79787 Lauchringen (DE)
(74) Vertreter: Gottschalk, Matthias

(56) Entgegenhaltungen:
- EP-A2- 0 004 885
- WO-A1-2010/142508
- DE-A1- 4 433 514
- DE-A1-102008 001 014
- DE-T2- 69 301 684
- US-A- 4 129 610

## Beschreibung

Die Erfindung betrifft ein Beschichtungssystem zum Aufbringen auf ein Bauteil eines Gebäudes mit den Merkmalen des Oberbegriffs des Anspruchs 1. Ferner betrifft die Erfindung ein Wärmedämmverbundsystem mit einem solchen Beschichtungssystem sowie eine Wärmedämmplatte und eine Armierung als Bestandteile eines solchen Beschichtungs- oder Wärmedämmverbundsystems. Schließlich werden ein Verfahren zur Ausbildung einer Funktionsschicht sowie die Verwendung eines erfindungsgemäßen Beschichtungssystems zur Ausbildung einer Funktionsschicht angegeben.

Um den jeweils an sie gestellten bauphysikalischen Anforderungen zu genügen, weisen Bauteile von Gebäuden in der Regel einen mehrschichtigen Aufbau auf. Beispielsweise werden die Außenwände von Gebäuden zur Wärmedämmung oftmals mit einem Wärmedämmverbundsystem versehen, das zumindest eine Wärmedämmschicht und eine hierauf aufgebrachte Putzschicht umfasst. Die Putzschicht kann ein- oder mehrlagig ausgebildet sein, wobei die Beschichtungsmassen zur Ausbildung einer mehrlagigen Putzschicht ein Beschichtungssystem der eingangs genannten Art darstellen.

Ein Beschichtungssystem der eingangs genannten Art wird insbesondere durch wenigstens zwei Beschichtungen bzw. Beschichtungsmassen ausgebildet, welche eine unterschiedliche Zusammensetzung besitzen und zeitlich nacheinander auf wenigstens einen Untergrund aufgebracht werden, so dass sie miteinander in Kontakt gebracht werden. Dabei kann eine erste Beschichtung bzw. Beschichtungsmasse bereits auf einem Träger aufgebracht worden sein, wobei dann der Träger einschließlich der ersten Beschichtung vor Ort mit einer zweiten Beschichtung bzw. Beschichtungsmasse in Kontakt gebracht wird. Bei dem Träger kann es sich beispielsweise um eine Putzträgerplatte oder ein in eine Putzschicht einzulegendes Armierungsgewebe handeln.

Vorrangige Aufgabe der Putzschicht ist es, die dahinter liegende Wärmedämmschicht vor Witterungseinflüssen zu schützen. Um dieser Aufgabe gerecht zu werden, muss sichergestellt sein, dass die Putzschicht beim Aushärten oder aufgrund von Spannungen, die nach dem Aushärten in die Putzschicht eingebracht werden, nicht zur Rissbildung neigt. Als außen liegende und damit dauerhaft sichtbare Schicht ist ferner dafür Sorge zu tragen, dass die Putzschicht einen ansprechenden optischen Eindruck über einen möglichst langen Zeitraum behält. Insbesondere soll der ursprüngliche Farbeindruck erhalten und die Oberfläche der Putzschicht frei von Algen - oder Pilzbewuchs bleiben. Um dies zu gewährleisten, werden den Beschichtungsmassen zur Ausbildung von Putzschichten regelmäßig Hilfsstoffe, wie beispielsweise Biozide, Hydrophobierungsmittel, Farbstoffe und/oder Trocknungsbeschleuniger, zugegeben. Trocknungsbeschleuniger werden insbesondere eingesetzt, um die Verarbeitbarkeit einer Beschichtungsmasse zu verbessern. Denn eine schnelle Trocknung gewährleistet eine schnelle Überarbeitbarkeit, vor allem bei Ausbildung mehrlagiger Putzschichten.

Die Zugabe von Hilfsstoffen in einer Beschichtungsmasse kann jedoch auch unerwünschte Nebeneffekte haben. Beispielsweise kann die Zugabe von Natriumoleat als Hydrophobierungsmittel zu Trockenmörtel dazu führen, dass die Viskosität beim Anmischen des Trockenmörtels stark zunimmt und der angemischte Trockenmörtel damit schwer zu verarbeiten ist.

Ferner können Hilfsstoffe bei wiederkehrender Durchfeuchtung der Putzschicht, beispielsweise durch Regen, ausgewaschen werden. Dies wirkt sich insbesondere in Bezug auf Hilfsstoffe ungünstig aus, die ihre Wirkung über einen längeren Zeitraum entfalten sollen, wie dies beispielsweise bei den Bioziden der Fall ist. Denn werden die Biozide aus der Putzschicht ausgewaschen, ist die Fassade nicht mehr ausreichend gegen Algen- oder Pilzbefall geschützt. Zugleich können die ausgewaschenen Biozide mit dem Regen in das Grundwasser gelangen und demzufolge die Umwelt belasten. Um die ausgewaschene Menge an Bioziden zu kompensieren, werden diese darüber hinaus häufig in größeren Mengen als erforderlich eingesetzt. Dies widerspricht zudem einem effizienten resourcenschonenden Materialeinsatz

Aus der Patentanmeldung US4129610A ist eine Antifouling-Beschichtung für Schiffe bekannt, welche eine Primerschicht offenbart, die einen (toxischen) Wirkstoff enthält. Weiterhin wird eine wasserlösliche Schutzschicht offenbart, durch deren Auflösung die Primerschicht freigelegt wird.

Aufgabe der vorliegenden Erfindung ist es, ein Beschichtungssystem der eingangs genannten Art anzugeben, das die vorstehend genannten Nachteile nicht aufweist bzw. nach dem Aufbringen auf einem Bauteil eines Gebäudes nicht zu den vorstehend genannten Nachteilen führt. Insbesondere soll das Beschichtungssystem einfach zu verarbeiten sein und/oder die Ausbildung einer Funktionsschicht ermöglichen, deren Funktion über einen möglichst langen Zeitraum erhalten bleibt.

Zur Lösung der Aufgabe wird ein Beschichtungssystem mit den Merkmalen des Anspruchs 1 vorgeschlagen. Vorteilhafte Weiterbildungen sind in den Unteransprüchen angegeben. Des Weiteren werden ein Wärmedämmverbundsystem mit einem solchen Beschichtungssystem sowie eine Wärmedämmplatte und eine Armierung für ein Wärmedämmverbundsystem angegeben. Die Aufgabe wird ferner gelöst durch ein Verfahren zur Ausbildung einer Funktionsschicht mit den Merkmalen des Anspruchs 9 sowie die Verwendung eines erfindungsgemäßen Beschichtungssystems zur Ausbildung einer Funktionsschicht.

Das vorgeschlagene Beschichtungssystem umfasst eine Beschichtungszusammensetzung A und eine Beschichtungszusammensetzung B. Erfindungsgemäß enthält die Beschichtungszusammensetzung A einen migrationsfähigen Wirkstoff und die Beschichtungszusammensetzung B einen Aktivator zur Freigabe des in der Beschichtungszusammensetzung A enthaltenen migrationsfähigen Wirkstoffs, so dass nach dem Aufbringen des Beschichtungssystems auf einem Bauteil eines Gebäudes der in der Beschichtungszusammensetzung B enthaltene Aktivator die Freigabe des in der Beschichtungszusammensetzung A enthaltenen migrationsfähigen Wirkstoffs bewirkt.

Unter einem migrationsfähigen Wirkstoff wird vorliegend eine Substanz verstanden, die eine bestimmte Wirkung an einem anderen Ort als dem Aufbringungsort entfaltet. Die Substanz muss demnach in der Lage sein, vom jeweiligen Aufbringungsort zu einem bestimmten Wirkungsort zu wandern. In einer Beschichtungszusammensetzung enthaltene migrationsfähige Wirkstoffe können insbesondere in Form von Ionen, Molekülen, Komplexen oder Nanoteilchen vorliegen. Zur Beschleunigung der Aushärtung einer Tonerde- und Portlandzement umfassenden Beschichtungsmasse können beispielsweise Alkalimetall-Ionen als Wirkstoff eingesetzt werden. Silane, Siloxane und/oder Silikone sowie Fettsäuresalze und -derivate können als Hydrophobierungsmittel eingesetzt werden. Die Migration des jeweiligen Wirkstoffs erfolgt vorzugsweise entlang eines vorhandenen Konzentrationsgefälles. Dabei wandert der Wirkstoff in der Regel zunächst an die Oberfläche der ihn aufnehmenden Schicht, ggf. in die angrenzende Schicht des Beschichtungssystems hinein. Der Wirkstoff kann - in Abhängigkeit von dem jeweils vorhandenen Konzentrationsgefälle - bis an die Oberfläche der weiteren Schicht wandern, wobei es sich beispielsweise um eine außenliegende, fassadenabschließende Schicht handeln kann. Sofern der Wirkstoff eine biozide Wirkung besitzt, wirkt er hier einem Algen- und/oder Pilzbewuchs der Fassade entgegen. Der Wirkungsort entspricht demnach nicht dem Aufbringungsort.

Die Migration des in der Beschichtungszusammensetzung A enthaltenen Wirkstoffs setzt zunächst dessen Freigabe voraus. Ein die Freigabe des migrationsfähigen Wirkstoffs bewirkender Aktivator ist in der Beschichtungszusammensetzung B enthalten. Dadurch ist sichergestellt, dass die Migration des Wirkstoffs erst nach Aufbringen beider Beschichtungszusammensetzungen A und B in Gang gesetzt wird und der Wirkstoff am gewünschten Wirkungsort seine Wirkung entfaltet. Das Aufbringen der beiden Beschichtungszusammensetzungen A und B erfolgt demnach bevorzugt zeitlich nacheinander, wobei die Reihenfolge beliebig ist. Beispielsweise kann erst die Beschichtungszusammensetzung A und danach die Beschichtungszusammensetzung B oder umgekehrt auf einen Untergrund oder einen Träger aufgebracht werden. Dies hängt unter anderem von der Beschaffenheit des Untergrundes bzw. des Trägers ab. Die eine Beschichtungszusammensetzung kann zudem auf einen anderen Untergrund oder Träger als die jeweils andere Beschichtungszusammensetzung aufgebracht werden. Beispiele hierfür werden nachfolgend genannt.

Zur Freigabe des Wirkstoffs bedarf es lediglich des Inkontaktbringens der beiden Beschichtungszusammensetzungen, von denen die eine den Wirkstoff und die andere den Aktivator enthält. Das Inkontaktbringen kann durch aufeinanderfolgendes schichtweises Auftragen der beiden Beschichtungszusammensetzungen oder durch Einbetten eines mit einer Beschichtungszusammensetzung beschichteten Trägers in eine Schicht aus der jeweils anderen Beschichtungszusammensetzung bewirkt werden.

Mit Freigabe des Wirkstoffs beginnt dieser entlang eines vorhandenen Konzentrationsgefälles zu wandern. Die Wanderung hält an, solange das Konzentrationsgefälle besteht und Wirkstoff und/oder Aktivator vorhanden sind.

Nach Freigabe und Migration des in der Beschichtungszusammensetzung A enthaltenen Wirkstoffs kann dieser allein oder mit wenigstens einem weiteren Wirkstoff zusammenwirkend die gewünschte Wirkung entfalten, wobei der weitere Wirkstoff vorzugsweise bereits am Wirkungsort vorhanden ist. Beispielsweise kann vorgesehen sein, dass die Wirkung des migrationsfähigen Wirkstoffs die Anwesenheit eines weiteren lediglich am Wirkungsort vorhandenen Wirkstoffs voraussetzt. Dadurch ist gewährleistet, dass die gewünschte Wirkung erst am Wirkungsort eintritt.

Der gewünschte Wirkungsort des in der Beschichtungszusammensetzung A enthaltenen migrationsfähigen Wirkstoffs ist eine aus der Beschichtungszusammensetzung B gebildete Beschichtung.

Die Migration des in der Beschichtungszusammensetzung A enthaltenen migrationsfähigen Wirkstoffs kann über die jeweilige Beschaffenheit der Beschichtungszusammensetzungen A und B gezielt beeinflusst bzw. gesteuert werden. Einflussfaktoren stellen unter anderem der Wassergehalt, die Permeabilität des eingesetzten Bindemittels oder die Schichtstärke dar, in welcher die Beschichtungszusammensetzungen jeweils aufgebracht werden. Ferner ist die Migration von der Natur des migrierenden Teilchens sowie dessen Wechselwirkung mit der umgebenden Matrix abhängig. Somit ist es möglich, nicht nur den Wirkungsort der in der Beschichtungszusammensetzung A enthaltenen migrationsfähigen Wirkstoffs vorzugeben, sondern auch den Beginn und die Zeitdauer der gewünschten Wirkung. Beispielsweise ist die Migrationsgeschwindigkeit des Wirkstoffs derart steuerbar, dass eine gewünschte Wirkung über einen längeren Zeitraum hinweg anhält. Auf diese Weise kann ein bestimmter Effekt verlängert oder immer wieder regeneriert werden. Dies erweist sich insbesondere in Zusammenhang mit Beschichtungen als vorteilhaft, die Wirkstoffe, wie beispielsweise Biozide enthalten, die in herkömmlichen Beschichtungen häufig ausgewaschen werden. Wird zur Ausbildung einer solchen Beschichtung ein erfindungsgemäßes Beschichtungssystem verwendet, kann durch den nachmigrierenden Wirkstoff bereits ausgewaschener Wirkstoff kompensiert und damit ein biologischer Bewuchs der Beschichtung über einen längeren Zeitraum hinweg verhindert werden. Entsprechendes gilt in Bezug auf andere Wirksubstanzen bzw. Hilfsstoffe, wie beispielsweise Hydrophobierungsmittel und/oder Farbstoffe.

Handelt es sich bei dem Wirk- bzw. Hilfsstoff um einen Trocknungsbeschleuniger, der ein schnelles Aushärten und eine schnelle Überarbeitbarkeit einer Beschichtung ermöglichen soll, kann die Verwendung eines erfindungsgemäßen Beschichtungssystems dazu beitragen, dass die eingangs genannten regelmäßig auftretenden unerwünschten Nebeneffekte, wie die einer schlechten Verarbeitbarkeit aufgrund einer erhöhten Viskosität, ausbleiben. Denn ist der Trocknungsbeschleuniger oder zumindest eine migrationsfähige Komponente eines solchen Hilfsstoffs in der Beschichtungszusammensetzung A und ein die Freigabe des Trocknungsbeschleunigers bzw. der Komponente bewirkender Aktivator sowie ggf. eine mit der ersten Komponente zusammenwirkende weitere Komponente ausschließlich in der Beschichtungszusammensetzung B enthalten, kann die gewünschte Wirkung bis zum Zeitpunkt des Inkontaktbringens der beiden Beschichtungszusammensetzungen verzögert werden. Auf diese Weise können Benetzungsprobleme beim Anmischen einer Beschichtungszusammensetzung, ein schnelles Erstarren und eine damit einhergehende stark verkürzte Verarbeitungszeit vermieden werden.

Bevorzugt ist vorgesehen, dass der migrationsfähige Wirkstoff in der Beschichtungszusammensetzung A gebunden, gelöst, suspendiert oder dispergiert ist. Beispielsweise kann zur Bindung des migrationsfähigen Wirkstoffs eine organische oder anorganische Matrix verwendet werden, wobei das Bindemittel der Matrix weder polymerisierend noch vernetzend wirken sollte. Ein in einer Bindemittelmatrix gebundener Wirkstoff ist in herkömmlicher Weise, beispielsweise durch Streichen, Spritzen oder Spachteln, auf einen beliebigen Untergrund auftragbar. Entsprechendes gilt in Bezug auf eine Beschichtungszusammensetzung A, in welcher der migrationsfähige Wirkstoff gelöst, suspendiert oder dispergiert vorliegt. In der Formulierung als Lösung, Suspension oder Dispersion sind keine zusätzlichen Bindemittel erforderlich. Ggf. ist auch der Wirkstoff selbst als Bindemittel anzusehen, wie beispielsweise im Fall der als Hydrophobierungsmittel einsetzbaren Siloxane.

Der Untergrund, auf den die Beschichtungszusammensetzung A aufgetragen wird, kann beispielsweise eine Wand aus Mauerwerk, Beton oder einem sonstigen Werkstoff sein. Die Beschichtungszusammensetzung A bildet dann vorzugsweise eine Art Grundierung aus. Auf die Grundierung folgt der Auftrag der Beschichtungszusammensetzung B, welche den Aktivator zur Freigabe des in der Beschichtungszusammensetzung A enthaltenen migrationsfähigen Wirkstoffs enthält. Indem die Beschichtungszusammensetzungen A und B zeitlich nacheinander aufgebracht werden, werden die Freigabe und die Migration des in der Beschichtungszusammensetzung A enthaltenen migrationsfähigen Wirkstoffs und damit der Eintritt der gewünschten Wirkung verzögert.

Darüber hinaus kann die Beschichtungszusammensetzung A eines erfindungsgemäßen Beschichtungssystems auch auf einen Träger aufgebracht werden bzw. auf einem Träger aufgebracht sein. Als Träger eignen sich insbesondere plattenförmige Werkstoffe, wie beispielsweise Wärmedämmplatten oder Putzträgerplatten, die vor oder nach dem Beschichten mit der Beschichtungszusammensetzung A an einem Bauteil eines Gebäudes angebracht werden.

Gemäß einer bevorzugten Ausführungsform ist der Träger, auf welcher die Beschichtungszusammensetzung A aufgebracht ist, eine Wärmedämmplatte. Weiterhin bevorzugt wurde die Beschichtungszusammensetzung A bereits werkseits auf die Wärmedämmplatte aufgebracht, so dass vor Ort an der Baustelle nur noch die Wärmedämmplatte am zu dämmenden Untergrund angebracht und danach die Beschichtungszusammensetzung B aufgetragen werden muss. Alternativ kann aber auch erst die Wärmedämmplatte am zu dämmenden Untergrund angebracht und danach die Beschichtungszusammensetzungen A und B aufgetragen werden, wobei der Auftrag nacheinander erfolgt.

Gemäß einer weiteren bevorzugten Ausführungsform der Erfindung ist der Träger, auf welcher die Beschichtungszusammensetzung A aufgebracht ist, eine Armierung. Die Armierung kann beispielsweise in Form einzelner Fasern oder in Form eines Gewebes vorliegen. Weiterhin vorzugsweise wird die Armierung in eine bereits auf einem Untergrund oder Träger aufgebrachte Beschichtungszusammensetzung B eingelegt, um die Freigabe des in der Beschichtungszusammensetzung A enthaltenen migrationsfähigen Wirkstoffs über den in der Beschichtungszusammensetzung B enthaltenen Aktivator zu bewirken. Die Beschichtungszusammensetzung A wurde vorzugsweise bereits werkseits auf die Armierung aufgebracht. Alternativ kann das Aufbringen der Beschichtungszusammensetzung A auf die Armierung auch erst vor Ort auf der Baustelle erfolgen.

Das Beispiel der Armierung zeigt deutlich, dass die Beschichtungszusammensetzungen A und B nicht zwingend auf demselben Untergrund aufgetragen werden müssen. Während als Untergrund für die Beschichtungszusammensetzung A die Armierung dient, wird die Beschichtungszusammensetzung B vorzugsweise auf einem bauseitigen Untergrund, wie beispielsweise eine Wand oder eine hieran angebrachten Wärmedämmplatte, aufgetragen. Ferner können die beiden Beschichtungszusammensetzung auf unterschiedliche Art und Weise miteinander in Kontakt gebracht werden. Dies kann durch Aufbringen der einen Beschichtungszusammensetzung auf der jeweils anderen erfolgen oder eben durch Einbringen eines mit der Beschichtungszusammensetzung A beschichteten Trägers in die Beschichtungszusammensetzung B.

Vorzugsweise dient bzw. dienen die Beschichtungszusammensetzung A und/oder die Beschichtungszusammensetzung B der Ausbildung einer Funktionsschicht, insbesondere einer Putz-, Kleber-, Farb- und/oder Schutzschicht. Das heißt, dass die beiden Beschichtungszusammensetzungen A und B jeweils allein oder zusammen eine Funktionsschicht ausbilden können. Beispielsweise kann eine auf einem Armierungsgewebe aufgebrachte Beschichtungszusammensetzung A gemeinsam mit einer Beschichtungszusammensetzung B, in welche das Armierungsgewebe eingelegt ist, eine Armierungsschicht ausbilden. Dies ist unabhängig davon, welche Wirkung der in der Beschichtungszusammensetzung A enthaltene Wirkstoff besitzt. Im Falle der Armierungsschicht kann die Wirkung des migrationsfähigen Wirkstoffs beispielsweise darin bestehen, die Trocknung und damit die Überarbeitbarkeit der Armierungsschicht zu beschleunigen. Werden statt eines Trocknungsbeschleunigers Hilfsstoffe, wie beispielsweise Biozide oder Hydrophobierungsmittel eingesetzt, besteht die Aufgabe des Wirkstoffs im Wesentlichen darin, dazu beitragen, dass die Funktionsschicht ihre Funktion optimal und möglichst lang anhaltend erfüllt.

Die Freigabe des in der Beschichtungszusammensetzung enthaltenen migrationsfähigen Wirkstoffs kann auf verschiedene Art und Weise bewirkt werden. Beispielsweise kann der Wirkstoff gelöst werden. Die Beschichtungszusammensetzung B enthält dann vorzugsweise Wasser, Alkohol oder ein anderes Lösungsmittel, wie beispielsweise ein Amin, als Aktivator. Alternativ oder ergänzend kann die Freigabe des migrationsfähigen Wirkstoffs durch eine Temperaturerhöhung oder eine Veränderung des pH-Wertes innerhalb des Systems bewirkt werden. Beispielsweise wird durch den einsetzenden Abbindeprozess einer zementösen Beschichtungszusammensetzung Reaktionswärme frei, welche die Freigabe und die Migration des in der Beschichtungszusammensetzung A enthaltenen Wirkstoffs aktiviert und/oder unterstützt.

Die Migration des in der Beschichtungszusammensetzung A enthaltenen Wirkstoffs sollte nicht nur erfolgen, solange die Beschichtungszusammensetzung B noch "feucht" ist, sondern über einen längeren Zeitraum hinweg. Hierzu muss eine geringe Restfeuchte in der Beschichtungszusammensetzung B erhalten bleiben, welche die Migration aufrechterhält.

Alternativ oder ergänzend kann das Migrationsvermögen des in der Beschichtungszusammensetzung A enthaltenen Wirkstoffes entsprechend hoch gewählt werden.

Zur Lösung der eingangs gestellten Aufgabe wird ferner ein Wärmedämmverbundsystem zur Wärmedämmung von Gebäuden vorgeschlagen, das ein erfindungsgemäßes Beschichtungssystem umfasst. Vorzugsweise ist dabei die Beschichtungszusammensetzung A auf einem Träger, insbesondere eine Wärmedämmplatte oder eine Armierung, beispielsweise in Form von Fasern oder eines Gewebes, aufgebracht. Die Aufbringung auf den Träger ist weiterhin vorzugsweise bereits werkseits erfolgt, so dass das Aufbringen des Beschichtungssystems erleichtert wird, da nur noch eine Beschichtungszusammensetzung auf einen Untergrund oder einen Träger aufzubringen gilt. Das vorgeschlagene Wärmedämmverbundsystem umfasst demnach vorzugsweise ferner wenigstens eine Wärmedämmplatte zur Ausbildung einer Wärmedämmschicht und/oder eine Armierung zur Ausbildung einer Armierungsschicht. Darüber hinaus kann das Wärmedämmverbundsystem wenigstens eine weitere Beschichtungszusammensetzung zur Ausbildung einer weiteren Funktionsschicht, wie beispielsweise einer Kleber-, Putz-, Farb- oder Schutzschicht, umfassen.

Des Weiteren wird eine Wärmedämmplatte für ein Wärmedämmverbundsystem vorgeschlagen, wobei wenigstens eine der Aufnahme einer Beschichtungszusammensetzung B dienenden Oberfläche der Wärmedämmplatte mit einer Beschichtungszusammensetzung A beschichtet ist, welche einen migrationsfähigen Wirkstoff enthält, der über einen in einer Beschichtungszusammensetzung B enthaltenen Aktivator freigebbar ist. Vorzugsweise wurde die Beschichtung der Wärmedämmplatte mit der Beschichtungszusammensetzung A bereits werkseits vorgenommen.

Ferner wird eine Armierung für ein erfindungsgemäßes Beschichtungssystem vorgeschlagen, wobei die Armierung, beispielsweise in Form von Fasern oder eines Gewebes, mit einer Beschichtungszusammensetzung A beschichtet ist, welche einen migrationsfähigen Wirkstoff enthält, der über einen in einer Beschichtungszusammensetzung B enthaltenen Aktivator freigebbar ist.

Die eingangs gestellte Aufgabe wird darüber hinaus durch das vorgeschlagene Verfahren zur Ausbildung einer Funktionsschicht, insbesondere einer Putz-, Kleber-, Farb- und/oder Schutzschicht unter Verwendung eines erfindungsgemäßen Beschichtungssystems gelöst. Die Beschichtungszusammensetzung A wird dabei auf einen Untergrund oder einen Träger, insbesondere eine Wärmedämmplatte oder eine Armierung, beispielsweise in Form einzelner Fasern oder in Form eines Gewebes, aufgebracht und der Untergrund oder der Träger in Kontakt mit der Beschichtungszusammensetzung B gebracht. Der Auftrag bzw. das Aufbringen der Beschichtungszusammensetzungen erfolgt zeitlich nacheinander, wobei die Reihenfolge beliebig ist. Das heißt, dass zunächst die Beschichtungszusammensetzung A und danach die Beschichtungszusammensetzung B aufgebracht werden kann oder umgekehrt. Der Auftrag bzw. das Aufbringen der Beschichtungszusammensetzungen muss zudem nicht auf demselben Untergrund erfolgen. Dies ist beispielsweise der Fall, wenn die Beschichtungszusammensetzung A auf einer Armierung und die Beschichtungszusammensetzung B auf einen bauseitigen Untergrund aufgebracht werden, und anschließend die beschichtete Armierung in die Beschichtungszusammensetzung B eingelegt wird.

Gemäß einer ersten bevorzugten Ausführungsform wird die Beschichtungszusammensetzung B auf den Untergrund oder den Träger aufgebracht wird, welcher zuvor mit der Beschichtungszusammensetzung A beschichtet worden ist. Bei dem Untergrund oder Träger kann es sich beispielsweise um eine Wand oder eine hieran angebrachte Wärmedämmplatte handeln. Vorzugsweise wird die Beschichtungszusammensetzung A als Grundierung aufgebracht. Sofern der Untergrund ein Träger, wie beispielsweise eine Wärmedämmplatte, ist, wird die Beschichtungszusammensetzung A vorzugsweise bereits werkseits aufgebracht.

Gemäß einer alternativen Ausführungsform des erfindungsgemäßen Verfahrens wird der mit der Beschichtungszusammensetzung A beschichtete Träger, vorzugsweise eine Armierung in Form einzelner Fasern oder in Form eines Gewebes, in die Beschichtungszusammensetzung B eingebracht. Das Einbringen des Trägers in die Beschichtungszusammensetzung B kann beispielsweise durch Einlegen oder Eindrücken erfolgen.

Schließlich wird die Verwendung eines erfindungsgemäßen Beschichtungssystems zur Ausbildung einer Funktionsschicht, insbesondere einer Putz-, Kleber-, Farb- und/oder Schutzschicht vorgeschlagen.

Anhand der nachfolgenden Beispiele, welche jeweils ein erfindungsgemäßes Beschichtungssystem betreffen, wird die Erfindung näher beschrieben.

### Beispiel 1

### Beschichtungszusammensetzung A

| | |
|---|---|
| 47,0 Gew.-% | Wasserglas als silikatisches Bindemittel |
| 5,0 Gew.-% | Natriumhydroxid |
| 47,0 Gew.-% | Wasser |
| 1,0 Gew.-% | Additive |

### Beschichtungszusammensetzung B

| | |
|---|---|
| 10,0 Gew.-% | Calciumaluminatzement |
| 0,5 Gew.-% | Borsäure |
| 15,0 Gew.-% | Wasser |
| 65,5 Gew.-% | Sande und/oder sonstige Füllstoffe |
| 8,0 Gew.-% | wässrige Polymerdispersion |
| 1,0 Gew.-% | Additive |

Im Beispiel 1 bilden basische Ionen den migrationsfähigen Wirkstoff. Hierzu umfasst die Beschichtungszusammensetzung A in einer Matrix aus einem silikatischen Bindemittel gebundenes Natriumhydroxid. Die Beschichtungszusammensetzung A wird bevorzugt auf einen Untergrund, wie beispielsweise eine Wand aus Mauerwerk oder Beton aufgetragen, worauf der Auftrag der Beschichtungszusammensetzung B folgt. Das in der Beschichtungszusammensetzung B enthaltene Wasser als Agens bzw. Aktivator löst die Natrium-Ionen aus der Bindemittelmatrix heraus und bewirkt somit die Migration des Wirkstoffs entlang eines vorhandenen Konzentrationsgefälles in die aus der Beschichtungszusammensetzung B hergestellte Beschichtung, welche beispielsweise eine Putz- oder Farbschicht sein kann. Das in die Putz- oder Farbschicht migrierende Natriumhydroxid bewirkt eine anhaltende Basizität der Oberfläche, so dass diese frei von biologischem Bewuchs bleibt. Der Wirkstoff kann aber auch allgemein der Einstellung des pH-Wertes der Putz- oder Farbschicht dienen.

### Beispiel 2

### Beschichtungszusammensetzung A

| | |
|---|---|
| 90,0 Gew.-% | wässrige Polymerdispersion |
| 3,0 Gew.-% | Lithiumhydroxid |
| 3,0 Gew.-% | Lithiumcarbonat |
| 3,5 Gew.-% | Wasser |
| 0,5 Gew.-% | Additive |

### Beschichtungszusammensetzung B

| | |
|---|---|
| 10,0 Gew.-% | Calciumaluminatzement |
| 0,5 Gew.-% | Borsäure |
| 15,0 Gew.-% | Wasser |
| 65,5 Gew.-% | Sande und/oder sonstige Füllstoffe |
| 8,0 Gew.-% | wässrige Polymerdispersion |
| 1,0 Gew.-% | Additive |

Im Beispiel 2 werden Lithium-Ionen als migrationsfähiger Wirkstoff eingesetzt. Die Lithium-Ionen liegen gebunden vor. Als Bindemittel dient eine Polymerdispersion, die redispergierbar ist. Zur Ausbildung einer schnell und vollständig durchhärtenden Armierungsschicht wird zunächst die Beschichtungszusammensetzung A auf einen Untergrund, wie beispielsweise eine Wand oder eine Wärmedämmplatte einer Wärmedämmschicht aufgetragen. Hierauf folgt der Auftrag der Beschichtungszusammensetzung B, welche Wasser als nukleophiles Agens bzw. Aktivator enthält. Das Wasser löst die Lithium-Ionen aus der Bindemittelmatrix der Beschichtungszusammensetzung A, so dass diese entlang eines vorhandenen Konzentrationsgefälles in die aus der Beschichtungszusammensetzung B hergestellten Beschichtung wandern. Die Lithium-Ionen reagieren mit dem in der Beschichtungszusammensetzung B enthaltenen Calciumaluminatzement in der Weise, dass der Trocknungs- bzw. Aushärtungsprozess beschleunigt wird. Wirkungsort des migrationsfähigen Wirkstoffs ist demnach die aus der Beschichtungszusammensetzung B hergestellte Beschichtung.

Alternativ kann die Beschichtungszusammensetzung A auch auf eine Armierung, beispielsweise in Form eines Gewebes, aufgetragen werden, die dann in eine frisch aufgetragene Beschichtung aus der Beschichtungszusammensetzung B eingelegt wird. Durch Einlegen der Armierung wird der Kontakt der beiden Beschichtungszusammensetzungen und damit die Freigabe und Migration des in der Beschichtungszusammensetzung A enthaltenen migrationsfähigen Wirkstoffs bewirkt.

### Beispiel 3

### Beschichtungszusammensetzung A

| | |
|---|---|
| 69,0 Gew.-% | wässrige Polymerdispersion |
| 30,0 Gew.-% | Natriumoleat |
| 1,0 Gew.-% | Additive |

### Beschichtungszusammensetzung B

| | |
|---|---|
| 20,0 Gew.-% | Zement, insbesondere Portlandzement |
| 2,0 Gew.-% | Calciumhydroxid |
| 75,0 Gew.-% | Sande und/oder sonstige Füllstoffe |
| 2,0 Gew.-% | Redispersionspulver |
| 1,0 Gew.-% | Additive |

Im Beispiel 3 wird Natriumoleat als migrationsfähiger Wirkstoff eingesetzt, welcher in einer Polymerdispersion gebunden ist. Die Beschichtungszusammensetzung A, welche den migrationsfähigen Wirkstoff enthält, wird vorzugsweise auf einen Untergrund, wie beispielsweise eine Wand aus Mauerwerk oder Beton aufgetragen. Hierauf folgt der Auftrag der Beschichtungszusammensetzung B, welche vorliegend auf einer Trockenmörtelzusammensetzung basiert, die vor Ort auf der Baustelle mit Wasser angemischt wird. Das Natriumoleat wirkt als Hydrophobierungsmittel und kann in geringen Mengen auch der Trockenmörtelzusammensetzung bereits zugegeben sein. Jedoch müssen die Mengen so gering sein, dass sich die Verarbeitbarkeit des angemischten Trockenmörtels nicht verschlechtert. Da diese Menge zur Hydrophobierung regelmäßig nicht ausreicht, ist der Einsatz größerer Mengen erwünscht ohne jedoch den unerwünschten Nebeneffekt der schlechten Verarbeitbarkeit in Kauf nehmen zu müssen. Das erfindungsgemäße Beschichtungssystem ermöglicht dies, indem die erforderliche Menge auf wenigstens zwei Beschichtungszusammensetzungen aufgeteilt wird, welche unabhängig voneinander verarbeitet werden.

### Beispiel 4

### Beschichtungszusammensetzung A

| | |
|---|---|
| 83,5 Gew.-% | wässrige Polymerdispersion |
| 10,0 Gew.-% | Organosiloxane |
| 5,0 Gew.-% | Wasser |
| 1,5 Gew.-% | Additive |

### Beschichtungszusammensetzung B

| | |
|---|---|
| 28,0 Gew.-% | wässrige Polymerdispersion |
| 6,0 Gew.-% | Organosiloxane |
| 16,0 Gew.-% | Wasser |
| 36,0 Gew.-% | Pigmente und/oder Füllstoffe |
| 10,0 Gew.-% | photokatalytisches Titandioxid |
| 4,0 Gew.-% | Additive |

Im Beispiel 4 umfasst die Beschichtungszusammensetzung A Organosiloxane als migrationsfähigen Wirkstoff. Die Beschichtungszusammensetzung A wird vorzugsweise auf einen Untergrund, wie beispielsweise eine Wand aus Mauerwerk oder Beton, aufgetragen. Hierauf folgt der Auftrag der Beschichtungszusammensetzung B, welche vorliegend eine photokatalytisch aktive Fassadenfarbe auf Acrylat-Bindemittelbasis ist. Der Beschichtungszusammensetzung B können ferner - entsprechend dem Beispiel 3 - geringe Mengen eines Hydrophobierungsmittels zugegeben sein.

Durch die photokatalytische Aktivität der Fassadenfarbe (Beschichtungszusammensetzung B) werden unter Lichteinwirkung etwaige in der Beschichtungszusammensetzung B enthaltene Hydrophobierungsmittel stetig abgebaut, so dass die Fassadenfarbe im Laufe der Zeit ihre Hydrophobie verliert. Durch die Migration der in der Beschichtungszusammensetzung A enthaltenen Organosiloxane kann die Hydrophobie der Fassadenfarbe regeneriert werden.

### Beispiel 5

### Beschichtungszusammensetzung A

| | |
|---|---|
| 79,0 Gew.-% | wässrige Polymerdispersion |
| 10,0 Gew.-% | biozide Wirkstoffe |
| 10,0 Gew.-% | Wasser |
| 1,0 Gew.-% | Additive |

### Beschichtungszusammensetzung B

| | |
|---|---|
| 30,0 Gew.-% | wässrige Polymerdispersion |
| 25,0 Gew.-% | Wasser |
| 35,0 Gew.-% | Pigmente und/oder Füllstoffe |
| 10,0 Gew.-% | Additive |

Die in der Beschichtungszusammensetzung A enthaltenen bioziden und zugleich migrationsfähigen Wirkstoffe, wie beispielsweise Zinkpyrithion oder Isothiazolinone, verhindern nach Freigabe und Migration einen biologischen Bewuchs der aus der Beschichtungszusammensetzung B hergestellten biozidfreien Deckschicht. Diese kann eine dünnschichtige Putz- oder Farbschicht sein.

Auch die Beschichtungszusammensetzung B kann geringe Mengen an bioziden Wirkstoffen enthalten, solange eine gute Verarbeitbarkeit der Beschichtungszusammensetzung B erhalten bleibt. In der Regel reichen derart geringe Mengen jedoch nicht aus, die Deckschicht frei von Algen- und/oder Pilzbewuchs zu halten. Hier schafft das erfindungsgemäße Beschichtungssystem Abhilfe, indem die bioziden Wirkstoffe im Wesentlichen der Beschichtungszusammensetzung A zugegeben werden, so dass eine gute Verarbeitbarkeit der Beschichtungszusammensetzung B gewährleistet ist.

### Beispiel 6

### Beschichtungszusammensetzung A

| | |
|---|---|
| 96,5 Gew.-% | wässrige Polymerdispersion |
| 3,0 Gew.-% | Thymolphtalein |
| 0,5 Gew.-% | Additive |

### Beschichtungszusammensetzung B

| | |
|---|---|
| 20,0 Gew.-% | Weißzement |
| 2,0 Gew.-% | Calciumhydroxid |
| 75,0 Gew.-% | Sande und/oder sonstige Füllstoffe |
| 2,0 Gew.-% | Redispersionspulver |
| 1,0 Gew.-% | Additive |

Bei dem migrationsfähigen Wirkstoff handelt es sich vorliegend um einen Indikator, welcher bei einem pH-Wert von 9,3 von farblos auf blau umschlägt. Der Indikator gibt Aufschluss über den Trocknungszustand der aus der Beschichtungszusammensetzung B hergestellten Beschichtung. Die Beschichtungszusammensetzung B ist trocken und überarbeitbar, wenn die blaue Färbung verschwunden ist.

Vorzugsweise wird die den Indikator enthaltene Beschichtungszusammensetzung A auf einen Untergrund, wie beispielsweise eine Wand aus Mauerwerk oder Beton aufgetragen, worauf der Auftrag der Beschichtungszusammensetzung B folgt. Hierbei handelt es sich vorliegend um eine zementöse alkalische Beschichtung, so dass sich diese zunächst blau färbt. Mit fortschreitender Aushärtung verschwindet die Färbung, so dass der Wirkstoff als Indikator für den Trocknungszustand der aus der Beschichtungszusammensetzung B hergestellten Beschichtung einsetzbar ist.

### Beispiel 7

### Beschichtungszusammensetzung A

| | |
|---|---|
| 30,0 Gew.-% | wässrige Polymerdispersion |
| 20,0 Gew.-% | nanoskaliges Silber in wässriger Lösung |
| 48,0 Gew.-% | Wasser |
| 2,0 Gew.-% | Additive |

### Beschichtungszusammensetzung B

| | |
|---|---|
| 30,0 Gew.-% | wässrige Polymerdispersion |
| 25,0 Gew.-% | Wasser |
| 35,0 Gew.-% | Pigmente und/oder Füllstoffe |
| 10,0 Gew.-% | Additive |

Das Silber als migrationsfähiger Wirkstoff liegt hier als Nanopartikel in wässriger Lösung vor. Die Nanopartikel werden in der Beschichtungszusammensetzung A in einer Polymerdispersion gebunden. Nach dem Auftrag der Beschichtungszusammensetzung A auf einem Untergrund, vorzugsweise eine Wand aus Mauerwerk oder Beton, folgt der Auftrag der Beschichtungszusammensetzung B, welche vorliegend der Ausbildung einer abschließenden Farbschicht dient. Bei ausreichender Feuchte migrieren Ag+-Ionen, die bereits in extrem niedrigen Konzentrationen eine biozide Wirkung aufweisen.

Die in den Beispielen 1 bis 7 genannten Additive können neben den bereits erwähnten Hilfsstoffen ferner weitere Hilfsstoffe, wie beispielsweise Verdicker, Dispergiermittel, Stabilisatoren und/oder Emulgatoren, umfassen.

Ferner können anstelle des jeweils angegebenen Bindemittels alternative Bindemittel eingesetzt werden. Redispergierbare Bindemittel sind neben Polymersdispersionen und Wasserglas ferner Kieselsole, Silikone und Organosiloxane, wobei letztere zudem als migrationsfähiger Wirkstoff Einsatz finden können.

Darüber hinaus können filmbildende Polymere zugegeben werden, um die Wasserlöslichkeit der Beschichtungszusammensetzungen zu steuern.

Wird das erfindungsgemäße Beschichtungssystem zur Ausbildung einer Funktionsschicht, wie beispielsweise einer Putz-, Kleber-, Farb- und/oder Schutzschicht, eingesetzt, ermöglichen die Beschichtungszusammensetzungen A und B des Beschichtungssystems den Einsatz von Stoffen, insbesondere Hilfsstoffen, in Mengen, die bislang zu unerwünschten Nebeneffekten in herkömmlichen Beschichtungsmassen geführt haben. Zugleich können die Stoffe bzw. Hilfsstoffe jedoch effizient und damit resourcenschonend eingesetzt werden, da Verluste, beispielsweise durch Auswaschungen, gering gehalten und durch nachmigrierende Wirk- bzw. Hilfsstoffe ggf. kompensiert werden. Auf diese Weise können zudem bestimmte Wirkungen der Wirk- bzw. Hilfsstoffe über einen langen Zeitraum hinweg regeneriert werden. Jede Beschichtungszusammensetzung für sich lässt sich einfach verarbeiten. Insbesondere sind schnelle Trocknungszeiten und damit eine schnelle Überarbeitung erreichbar. Die schnellere Trocknung wiederum ermöglicht größere Schichtstärken, wobei auch bei größeren Schichtstärken eine vollständige Durchtrocknung gewährleistet ist. Die vollständige Durchtrocknung kann zudem über Indikatoren angezeigt werden, so dass eine größere Verarbeitungssicherheit bei Anwendung eines erfindungsgemäßen Beschichtungssystems besteht. Zudem ist der Einsatz eines erfindungsgemäßen Beschichtungssystems auch in der kalten Jahreszeit oder bei hoher Luftfeuchte möglich, wo andere herkömmliche Systeme versagen.

## Patentansprüche

1. Beschichtungssystem zum Aufbringen auf ein Bauteil eines Gebäudes umfassend eine Beschichtungszusammensetzung A und eine Beschichtungszusammensetzung B, **dadurch gekennzeichnet, dass** die Beschichtungszusammensetzung A einen migrationsfähigen Wirkstoff und die Beschichtungszusammensetzung B einen Aktivator zur Freigabe des in der Beschichtungszusammensetzung A enthaltenen migrationsfähigen Wirkstoffs enthält, so dass nach dem Aufbringen des Beschichtungssystems der in der Beschichtungszusammensetzung B enthaltene Aktivator die Freigabe und Migration des in der Beschichtungszusammensetzung A enthaltenen migrationsfähigen Wirkstoffs bewirkt, wobei der Wirkstoff vom Aufbringungsort zu einem Wirkungsort wandert, der eine aus der Beschichtungszusammensetzung B gebildete Beschichtung ist.

2. Beschichtungssystem nach Anspruch 1,
**dadurch gekennzeichnet, dass** der migrationsfähige Wirkstoff in der Beschichtungszusammensetzung A gebunden, gelöst, suspendiert oder dispergiert ist.

3. Beschichtungssystem nach Anspruch 1 oder 2,
**dadurch gekennzeichnet, dass** die Beschichtungszusammensetzung A auf einem Träger aufgebracht ist, wobei der Träger vorzugsweise eine Wärmedämmplatte oder eine Armierung, beispielsweise in Form von Fasern oder einem Gewebe, ist.

4. Beschichtungssystem nach einem der vorhergehenden Ansprüche,
**dadurch gekennzeichnet, dass** die Beschichtungszusammensetzung A und/oder die Beschichtungszusammensetzung B der Ausbildung einer Funktionsschicht, insbesondere einer Putz-, Kleber-, Farb- und/oder Schutzschicht, dient bzw. dienen.

5. Beschichtungssystem nach einem der vorhergehenden Ansprüche,
**dadurch gekennzeichnet, dass** der in der Beschichtungszusammensetzung B enthaltene Aktivator Wasser, Alkohol oder ein anderes Lösungsmittel, wie beispielsweise ein Amin, ist und/oder der Aktivator die Freigabe des migrationsfähigen Wirkstoffs durch eine Temperaturerhöhung oder Veränderung des pH-Wertes innerhalb des Systems bewirkt.

6. Wärmedämmverbundsystem zur Wärmedämmung von Gebäuden umfassend ein Beschichtungssystem nach einem der vorhergehenden Ansprüche, wobei die Beschichtungszusammensetzung A vorzugsweise auf einem Träger, insbesondere eine Wärmedämmplatte oder eine Armierung, beispielsweise in Form von Fasern oder eines Gewebes, aufgebracht ist.

7. Wärmedämmplatte für ein Wärmedämmverbundsystem nach Anspruch 6, wobei die Wärmedämmplatte wenigstens eine der Aufnahme einer Beschichtungszusammensetzung B dienende Oberfläche besitzt, die mit einer Beschichtungszusammensetzung A beschichtet ist, welche einen migrationsfähigen Wirkstoff enthält, der über einen in der Beschichtungszusammensetzung B enthaltenen Aktivator freigebbar ist.

8. Armierung für ein Beschichtungssystem nach einem der Ansprüche 1 bis 5, wobei die Armierung, beispielsweise in Form von Fasern oder eines Gewebes, mit einer Beschichtungszusammensetzung A beschichtet ist, welche einen migrationsfähigen Wirkstoff enthält, der über einen in einer Beschichtungszusammensetzung B enthaltenen Aktivator freigebbar ist.

9. Verfahren zur Ausbildung einer Funktionsschicht, insbesondere einer Putz-, Kleber-, Farb- und/oder Schutzschicht unter Verwendung eines Beschichtungssystems nach einem der Ansprüche 1 bis 5, wobei eine einen migrationsfähigen Wirkstoff enthaltende Beschichtungszusammensetzung A auf einen Untergrund oder einen Träger, insbesondere eine Wärmedämmplatte oder eine Armierung, beispielsweise in Form von Fasern oder eines Gewebes, aufgebracht und der Untergrund oder der Träger in Kontakt mit einer Beschichtungszusammensetzung B gebracht wird, die einen Aktivator zur Freigabe des migrationsfähigen Wirkstoffs enthält.

10. Verfahren nach Anspruch 9,
**dadurch gekennzeichnet, dass** die Beschichtungszusammensetzung B auf einen Untergrund oder Träger aufgebracht wird, welcher zuvor mit der Beschichtungszusammensetzung A beschichtet worden ist.

11. Verfahren nach Anspruch 9,
**dadurch gekennzeichnet, dass** ein mit der Beschichtungszusammensetzung A beschichteter Träger, vorzugsweise eine Armierung in Form von Fasern oder einem Gewebe, in die Beschichtungszusammensetzung B eingebracht wird.

12. Verwendung eines Beschichtungssystems nach einem der Ansprüche 1 bis 5, zur Ausbildung einer Funktionsschicht, insbesondere einer Putz-, Kleber-, Farb- und/oder Schutzschicht.

## Claims

1. A coating system for application to a building component of a building, comprising a coating composition A and a coating composition B,
**characterized in that** the coating composition A contains an active agent capable of migration and the coating composition B contains an activator for releasing the active agent capable of migration, which is contained in the coating composition A, so that, after the application of the coating system, the activator, which is contained in the coating composition B, causes the release and migration of the active agent capable of migration, which is contained in coating composition A, wherein the active agent migrates from the application site to a site of action, which is a coating formed from the coating composition B.

2. The coating system according to Claim 1,
**characterized in that** the active agent capable of migration is bonded, dissolved, suspended or dispersed in the coating composition A.

3. The coating system according to Claim 1 or 2,
**characterized in that** the coating composition A is applied on a support, wherein the support is preferably a thermal insulation board or a reinforcement, for example in the form of fibres or a woven fabric.

4. The coating system according to one of the preceding claims,
**characterized in that** the coating composition A and/or the coating composition B is or are used for the construction of a functional layer, particularly a plaster, adhesive, paint and/or protective layer.

5. The coating system according to one of the preceding claims,
**characterized in that** the activator, which is contained in the coating composition B, is water, alcohol or a different solvent, such as an amine for example, and/or the activator causes the release of the active agent capable of migration by means of a temperature increase or change of the pH value within the system.

6. An exterior insulation and finishing system for the thermal insulation of buildings, comprising a coating system according to one of the preceding claims, wherein the coating composition A is preferably applied on a support, particularly a thermal insulation board or a reinforcement, for example in the form of fibres or a woven fabric.

7. A thermal insulation board for an exterior insulation and finishing system according to Claim 6, wherein the thermal insulation board has at least one surface which is used for accommodating a coating composition B, which surface is coated with a coating composition A, which contains an active agent capable of migration, which can be released by means of an activator contained in the coating composition B.

8. A reinforcement for a coating system according to one of Claims 1 to 5, wherein the reinforcement, for example in the form of fibres or a woven fabric, is coated with a coating composition A, which contains an active agent capable of migration, which can be released by means of an activator contained in a coating composition B.

9. A method for constructing a functional layer, particularly a plaster, adhesive, paint and/or protective layer using a coating system according to one of Claims 1 to 5, wherein a coating composition A containing an active agent capable of migration is applied onto a substrate or a support, particularly a thermal insulation board or a reinforcement, for example in the form of fibres or a woven fabric, and the substrate or the support is brought into contact with a coating composition B, which contains an activator for releasing the active agent capable of migration.

10. The method according to Claim 9,
**characterized in that** the coating composition B is applied onto a substrate or support, which had previously been coated with the coating composition A.

11. The method according to Claim 9,
**characterized in that** a support coated with the coating composition A, preferably a reinforcement in the form of fibres or a woven fabric, is introduced into the coating composition B.

12. The use of a coating system according to one of Claims 1 to 5, for constructing a functional layer, particularly a plaster, adhesive, paint and/or protective layer.

## Revendications

1. Système de revêtement, destiné à être appliqué sur un élément de construction d'un bâtiment, comprenant une composition de revêtement A et une composition de revêtement B, **caractérisé en ce que** la composition de revêtement A contient un principe actif susceptible de migrer et la composition de revêtement B contient un activateur, destiné à libérer le principe actif susceptible de migrer contenu dans la composition de revêtement A, de telle sorte qu'après l'application du système de revêtement, l'activateur contenu dans la composition de revêtement B provoque la libération et la migration du principe actif susceptible de migrer contenu dans la composition de revêtement A, le principe actif migrant du site d'application vers un site d'action, qui est un revêtement formé de la composition de revêtement B.

2. Système de revêtement selon la revendication 1,
**caractérisé en ce que** le principe actif susceptible de migrer est lié, dissous, en suspension ou en dispersion dans la composition de revêtement A.

3. Système de revêtement selon la revendication 1 ou 2,
**caractérisé en ce que** la composition de revêtement A est appliquée sur un support, le support étant de préférence un panneau isolant thermique ou une armature, par exemple sous la forme de fibres ou d'un tissu.

4. Système de revêtement selon l'une quelconque des revendications précédentes,
**caractérisé en ce que** la composition de revêtement A et/ou la composition de revêtement B sert ou servent à créer une couche fonctionnelle, notamment une couche d'enduit, une couche d'agent adhésif, une couche de peinture et/ou une couche protectrice.

5. Système de revêtement selon l'une quelconque des revendications précédentes,
**caractérisé en ce que** l'activateur contenu dans la composition de revêtement B est de l'eau, de l'alcool ou un autre solvant, comme par exemple une aminé et/ou **en ce que** l'activateur provoque la libération du principe actif susceptible de migrer par une élévation de la température ou par une modification de la valeur pH à l'intérieur du système.

6. Système d'isolation thermique, destiné à assurer l'isolation thermique de bâtiments, comprenant un système de revêtement selon l'une quelconque des revendications précédentes, la composition de revêtement A étant appliquée de préférence sur un support, notamment un panneau isolant thermique ou une armature, par exemple sous la forme de fibres ou dans un tissu.

7. Panneau isolant thermique, pour un système d'isolation thermique selon la revendication 6, le panneau isolant thermique présentant au moins une surface servant à recevoir une composition de revêtement B, qui est revêtue d'une composition de revêtement A, laquelle contient un principe actif susceptible de migrer, qui est susceptible d'être libéré par un activateur contenu dans la composition de revêtement B.

8. Armature pour un système de revêtement selon l'une quelconque des revendications 1 à 5,
l'armature se présentant par exemple sous la forme de fibres ou d'un tissu étant revêtue d'une composition de revêtement A, laquelle contient un principe actif susceptible de migrer, qui est susceptible d'être libéré par un activateur contenu dans la composition de revêtement B.

9. Procédé, destiné à créer une couche fonctionnelle, notamment une couche d'enduit, une couche d'agent adhésif, une couche de peinture et/ou une couche protectrice, en utilisant un système de revêtement selon l'une quelconque des revendications 1 à 5, une composition de revêtement A qui contient un principe actif susceptible de migrer étant appliquée sur un fond ou un support, notamment un panneau isolant thermique ou une armature, par exemple sous la forme de fibres ou d'un tissu et le fond ou le support étant amené en contact avec une composition de revêtement B, qui contient un activateur destiné à libérer le principe actif susceptible de migrer.

10. Procédé selon la revendication 9,
**caractérisé en ce que** l'on applique la composition de revêtement B sur un fond ou un support, lequel a été préalablement revêtu de la composition de revêtement A.

11. Procédé selon la revendication 9,
**caractérisé en ce que** l'on introduit un support revêtu de la composition de revêtement A, de préférence une armature sous la forme de fibres ou d'un tissu dans la composition de revêtement B.

12. Utilisation d'un système de revêtement selon l'une quelconque des revendications 1 à 5, pour créer une couche fonctionnelle, notamment une couche d'enduit, une couche d'agent adhésif, une couche de peinture et/ou une couche protectrice.
